# EUROPEAN PATENT SPECIFICATION

(11) **EP 2 830 892 B1**
(45) Date of publication and mention of the grant of the patent: **08.05.2019**
(21) Application number: 13769293.5
(22) Date of filing: 15.03.2013
(51) Int. Cl.: B60C 11/13, B60C 11/02, B29D 30/54, B29D 30/56, B60C 11/00

(54) **TIRE TREADS WITH REDUCED UNDERTREAD THICKNESS**
REIFENLAUFFLÄCHEN MIT REDUZIERTER GRUNDGUMMISTÄRKE
BANDES DE ROULEMENT AYANT UNE ÉPAISSEUR DE SOUS-CHAPE RÉDUITE

(30) Priority: 30.03.2012 US 201261618267 P
(43) Date of publication of application: 04.02.2015
(73) Proprietor: Compagnie Générale des Etablissements Michelin, 63000 Clermont-Ferrand (FR)
(72) Inventor: COLBY, E. Bruce, Greenville, South Carolina 29605 (US); TSIHLAS, Dimitri G., Greenville, South Carolina 29605 (US); ZARAK, Cesar E., Greenville, South Carolina 29605 (US)
(74) Representative: Casalonga
(86) International application number: PCT/US2013/032467
(87) International publication number: WO 2013/148355

(56) References cited:
- EP-A2- 1 541 383
- WO-A1-2011/002454
- GB-A- 2 363 100
- JP-A- H1 076 810
- JP-A- H08 268 010
- JP-A- 2002 067 622
- US-A- 3 739 828
- US-A- 4 114 671
- US-A- 4 114 671
- US-A- 5 115 850
- US-A- 5 385 188
- US-A- 5 535 798
- US-A- 6 016 858
- US-A1- 2006 137 794
- US-A1- 2009 194 213

## Description

This application claims priority to, and the benefit of, U.S. Provisional Patent Application No. 61/618,267, filed March 30, 2012 with the U.S. Patent Office.

### BACKGROUND OF THE INVENTION

### Field of the Invention

This invention relates generally to treads for retreaded tires, and more particularly, to precured treads for application to a tire carcass.

In particular, the present invention relates to a tire tread according to the preamble of claim 1, such as it is for example known from US5385188 or JP2002067622.

### Description of the Related Art

Precured treads are designed to include an undertread below the grooves to provide sufficient strength and integrity to the precured tread for proper handling during retreading operations, for stability in placement on the tire carcass being recapped, and to maintain the designed groove width as the retreaded tire is put in an envelope and cured. Furthermore, this undertread is often of at least a minimum thickness to ensure that the tread does not rip or tear when handled or when the bottom side of the tread is abraded in preparation for bonding to a tire carcass. The undertread of the procured tire becomes part of the total undertread of the newly retreaded tire, and, generally, an equivalent amount of the original undertread is removed from the tire being retreaded to accommodate the new undertread thickness of the precured tread to maintain the desired total undertread thickness in the finished tire.

In an effort to reduce the thickness and weight of the new precured tread, which reduces waste as less tread is removed from the used tire during the retreading process, it would be advantageous to reduce the undertread of the precured tread while maintaining the tread stability and rigidity by increasing the strength and rigidity of the groove bottom itself. A thinner undertread on the precured tread would allow more of the original undertread to be retained on the tire being retreaded. The net result would be a retreaded tire with the same skid depth and undertread thickness as before, but with significantly less new rubber being spent. Furthermore, a tread having a reduced undertread would be better able to accommodate a used tire from which an insufficient amount of undertread was removed prior to application of the new precured tread. Otherwise, the effective or net undertread thickness of the retreaded tire may be thicker than desired, which may reduce tire performance.

Furthermore, during tire operation, there is the possibility that cracks may form and propagate along a groove bottom, such as where the groove side intersects the groove bottom. This arises, at least in part, due to the cycle deflection of the tire as the tire tread repeatedly rotates through the tire footprint during tire operation. A more rigid groove bottom could serve to prevent the formation of these cracks.

### SUMMARY OF THE INVENTION

The invention comprises a tire tread, according to independent claim 1. The dependent claims relate to advantageous embodiments.

The foregoing and other objects, features and advantages of the invention will be apparent from the following more detailed descriptions of particular embodiments of the invention, as illustrated in the accompanying drawings wherein like reference numbers represent like parts of the invention.

### DETAILED DESCRIPTION OF THE DRAWINGS

FIG. **1** is a side cross sectional view taken laterally across a retreated tire comprising a tread arranged atop a tire carcass, the tread including lateral and longitudinal grooves extending between a top side and an undertread having a number of protrusions forming a pattern on the undertread.
FIG. **2** is a front cross-sectional view taken longitudinally across the retreaded tire shown in Fig. 1 which comprises a tread arranged atop a tire carcass, the tread having lateral grooves extending across the width of the tire.
FIG. **3** is a front sectioned cross sectional view of the tread separated from the tire carcass and taken along line **3-3** in FIG. **2****.**
FIG. **4** is a top sectional view of the tread shown in FIGS. **1-3** and illustrating the lateral and longitudinal grooves extending from the tread to the undertread and the protrusions extending from the undertread into the tread.
FIG. **5** is a top view of a first embodiment of the undertread having a number of protruding strengthening members forming a stone ejector arrangement.
FIG. **6** is a top view of a second embodiment of the undertread having a number of protruding strengthening members.
FIG. **7** is a top view of a third embodiment of the undertread having a number of protruding strengthening members.
FIG. **8** is a top view of an alternative tread, the tread having strengthening members arranged along a length of a groove bottom and extending from opposing sides of the groove in an alternating arrangement in accordance with a particular embodiment of the invention.
FIG. **9** is a front sectional view of a tread along line **9-9** in FIG. **8** showing the tapering strengthening members protruding from the groove bottom and from opposing sides of the groove.

### DETAILED DESCRIPTION OF PARTICULAR EMBODIMENTS

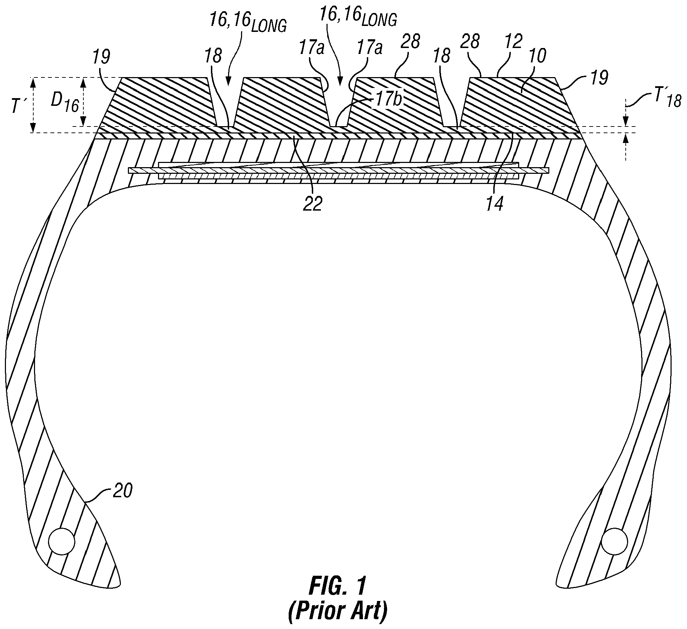

Particular embodiments of the invention provide a tire tread. The tire tread may comprise a molded new tire tread, the tread either being molded prior to application to a tire carcass, such as to form a retreaded tire, or being molded with the tire during new tire formation. The invention includes the addition of strengthening members (which may also be referred to as stiffening members) comprising protrusions extending into a groove arranged within a tread from the bottom of a groove. By the addition of strengthening members along the groove bottom, at least locally the tread is stiffer or stronger in the area of the grooves. This allows the thickness of the tread underneath the grooves, which is referred to as the undertread, to be reduced while not significantly reducing stiffness of the tread, including portions of the tread proximate the groove bottom. By reducing the undertread, a higher percentage of tread is maintained above the undertread for use during the normal wear life of the tread. By maintaining the stiffness of the tread, proper handling of the tread is maintained without risk of tearing. By providing the strengthening members along the groove bottom, crack initiation and/or propagation along a groove bottom may be avoided or significantly reduced during tire operation. Furthermore, by arranging stiffening members along the groove bottom, any peaking or raising of the reduced thickness undertread is generally avoided, or at least significantly reduced (relative a reduced thickness undertread not including strengthening members) during curing operations, where otherwise the bonding layer (identified as element **22** in FIG. **1**) would push the undertread upwards into the depth of the groove (identified as element **16** in FIG. **1**).

Particular methods of forming a retreaded tire comprise the step of applying a tire tread to a tire carcass. The tire carcass generally includes a pair of beads, a pair of sidewalls, body plies, and a belt package if the tire is a radial tire (otherwise, if not including a belt package, the tire is a biased ply tire). The body plies and belt package generally comprise plies of rubber containing strands of reinforcements. When retreading a tire, a used tire carcass is provided, which generally comprises a cured tire having at least a portion of the old tread removed so that a new tread may be attached to the tire carcass to form a retreaded tire. Commonly, at least a portion of the old tread is removed to a desired depth by performing a buffing or abrading operation. The old tread may be complete or partially removed. When forming a new tire, in lieu of a retreaded tire, a new tire carcass is provided, where such tire carcass is generally uncured.

When applying the tread to the tire, bonding material may be employed to attach or improve attachment of the tread to the tire carcass. For example, a bonding rubber (comprising natural or synthetic rubber) may be arranged between the tread and the tire carcass. By further example, bonding material comprising an adhesive may be arranged between the tread and the tire carcass. In such instances, the methods further include the step of providing a bonding agent between said tire carcass and said bottom side.

Particular methods include the step of forming the tire tread to include a tread thickness bounded by a top side (also referred to as a ground-engaging side of the tread, configured to engage a surface upon which the tire operates during vehicle operation) and a bottom side (configured for attachment to a tire carcass) and opposing lateral sides and a groove extending into the tread thickness from the tread top side and terminating within a thickness of the tread at a groove bottom, the groove having a width defined by a pair of opposing sides and the groove bottom being spaced from the bottom side of the tread by an undertread thickness. It is understood that the groove may comprise any type of groove having a groove bottom, where the groove is characterized as having any desired size, shape, and geometry that may be employed in any desired tire tread. The tread is formed to further include a plurality of strengthening members forming protrusions extending into the groove from the groove bottom and from at least one side of the pair of opposing groove sides, the plurality of strengthening members being arranged along a length of the groove. For example, when retreading a tire, the tread may be molded and cured according to any known method and operation of retreading, which includes molding and curing the tread prior to applying the tread to the tire carcass to provide a precured tire tread. By further example, when the tire being formed is a new tire, the tread may be molded and cured according to any known method or operation of forming a new tire, which includes molding and curing the tread while attached to the tire carcass.

The strengthening members may be arranged in any one or more grooves, where such one or more grooves may comprise longitudinal and/or lateral grooves. The strengthening members may also extend partially or fully across the groove width, and in any path or direction. In particular embodiments, for example, each of the strengthening members extend from one or both sides of a groove. Furthermore, the strengthening members may form any desired shape. Finally, the size, shape, and direction of extension may vary amongst any plurality of strengthening members along the length of any groove or between different grooves within the tire tread. The strengthening members increase the stiffness of the tread so that the thickness of the tread arranged under the groove, that is, between the groove and the bottom side of the tread, which is referred to as the undertread, may be of a reduced thickness. By providing a reduced thickness undertread, a higher percentage of the tread thickness is arranged at or above the bottom of the groove bottom, which places a higher percentage of the tread within the useable portion of the tread. The overall tread thickness may also shrink with the reduction in undertread thickness. In providing a reduced undertread, any reduction from a normal undertread thickness is possible. It is also understood, however, that the strengthening members may be used in any tread, whether or not being characterized as being a reduced thickness, normal thickness, or even increased thickness tread or as having a reduced thickness, normal thickness, or increased thickness undertread, as it is understood that the strengthening members can be useful for any such tread to provide additional strength and/or reduce or eliminate cracking, for example.

Particular methods discussed above will now be described in further detail below in association with the figures filed herewith exemplifying the performance of the methods in association with particular embodiments of the tread.

With reference to FIG. 1, a prior art tread **10** is shown in a cross-sectional view extending laterally across the tread. The tread **10** is shown as having a top side **12** and a bottom side **14** (each of which may also be referred to as top and bottom faces, respectfully) and a thickness **T'** extending there between. The tread also includes a plurality of grooves **16,** such as longitudinal and laterally grooves, extending from the top side **12** towards the bottom side **14.** In the figure shown, longitudinal grooves **16_{long}** are shown extending from the top side **12** towards the bottom side **14.** The grooves **16** terminate at a groove bottom **17b** offset a distance **T'₁₈** from the tread bottom side **14** to define an undertread having a thickness **T'₁₈.** Typically, the prior art undertread thickness **T'₁₈** is equal to approximately 2.5-4.5 mm. The grooves **16** also have a width defined by opposing sides **17a.** A skid depth **D₁₆** is defined by the difference between the thickness **T'** between the top side **12** and bottom side **14** and the thickness **T'₁₈** of the undertread **18.** The skid depth **D₁₆** is the thickness of useful tread **10** contained within the precured retread, that is, a thickness designed to be available for wearing during vehicle operation. The tread **10** also extends between opposing lateral sides **19,** which may be coextensive with the tire carcass **20.** The tread **10** is bonded at the bottom end **14** to the tire carcass **20,** either directly or by use of a bonding material **22,** such as a layer of bonding rubber or adhesive, arranged between the tread and the tire carcass.

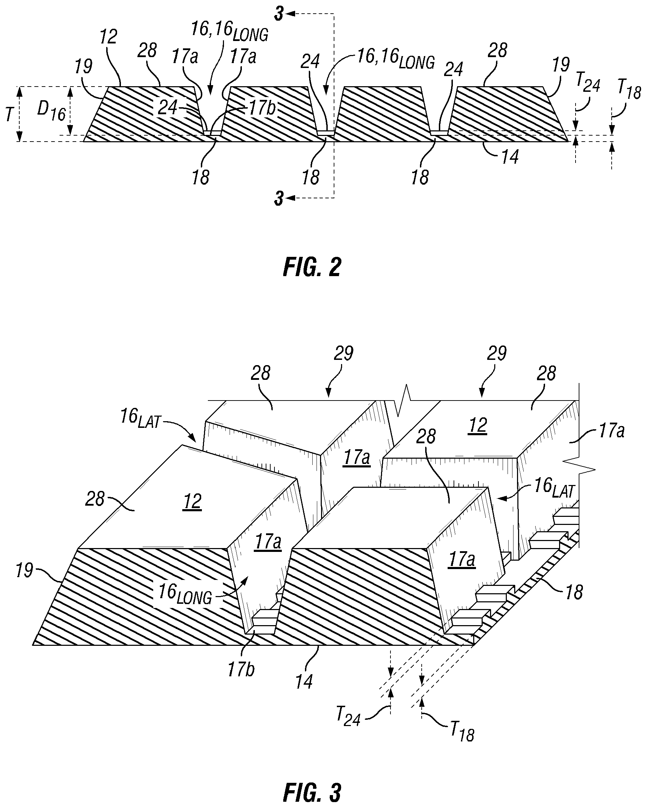

With reference to FIGS. **2-4****,** an exemplary embodiment of the invention is shown. In particular, an exemplary tread **10** is shown having a top side (or face) **12** and a bottom side (or face) **14** and a thickness **T** extending there between. A plurality of grooves, generally indicated as **16,** are shown, comprising lateral grooves **16ₗₐₜ** and longitudinal grooves **16_{long}** extending into the tread thickness from the top side **12** towards the bottom side **14.** Longitudinal and lateral grooves **16_{long}, 16ₗₐₜ** are shown to extend longitudinally (that is, in a lengthwise direction) along a linear path, although is it understood that each may extend lengthwise along any desired path, which includes any curvilinear path or non-linear path. As best shown in FIGS. **3-4** in a particular embodiment, longitudinal grooves **16_{long}** extend along a linear path while lateral grooves **16ₗₐₜ** extend along a non-linear path. Furthermore, the lateral and longitudinal grooves may extend along continuous or discontinuous path. Grooves **16** also terminate at a groove bottom **17b,** offset a distance **T₁₈** from the tread bottom side **14** to define an undertread having a thickness **T₁₈.** The undertread thickness **T₁₈** is thinner than the undertread thickness of the prior art tread of FIG. **1** due to the addition of strengthening members **24** arranged along the groove bottom **17b** to provide sufficient rigidity and strength to improve handling of the tread, to maintain dimensional stability of the tread, and to prevent tearing of the tread during the retreading process, such as when the tread is handled, transported, and applied to the tire carcass. With the addition of strengthening members **24** as described herein, the undertread thickness **T₁₈** is reduced 1 to 3 mm to 1.5 mm or less, which at least equals a 40 to 67% decrease in the undertread thickness relative to a typical undertread thickness of 2.5 to 4.5 mm. In other embodiments, the undertread thickness **T₁₈** is reduced to approximately 1.0 mm or less, which at least equals a 60% to 78% decrease in the undertread thickness relative the typical undertread thicknesses. In these exemplary embodiments, which concern truck tires, the typical overall tread thickness **T** is generally 12 to 30 mm. Therefore, the prior art undertread typically consumes 8% to 15% of the 30 mm thick tread and 21% to 38% of the 12 mm thick tread. However, when reducing the undertread thickness, the undertread may consume less than 8% of the tread thickness. For example, when reducing the undertread thickness from 2.5 mm to 1.5 mm, whereby a 12 mm thick tread becomes an 11 mm thick tread, the reduced undertread consumes no more than 14% (that is, 14% or less) of the thinner tread. Furthermore, when reducing the undertread thickness from 2.5 mm to 1.0 mm, and the 12 mm thick tread becomes a 10.5 mm thick tread, the reduced undertread consumes no more than 10% (that is, 10% or less) of the thinner tread. Performing similar calculations on a 30 mm thick tread for the same reduction in undertread, the reduced undertread consumes no more than 5% (that is, 5% or less) of the thinner tread (when reducing the undertread thickness to 1.5 mm) and 4% (that is, 4% or less) of the thinner tread (when reducing the undertread thickness to 1.0 mm).

With continued reference to FIGS. **2-4****,** strengthening members **24** comprise protrusions extending upwardly or outwardly from the groove bottom **17b** into the corresponding groove **16** by a distance **T₂₄.** Distance **T₂₄** is also referred to as the thickness of the strengthening members **24.** Strengthening members **24** also have a width **W₂₄.** In the particular embodiment shown, strengthening members extend across a full width **W₁₆** of each groove measured at the groove bottom and from each side **17a.** In other embodiments, strengthening members **24** may extend fully or partially between opposing sides **17a** and across the groove width **W₁₆.** It is understood that the strengthening members **24** are sufficiently sized, oriented, and spaced to provide a sufficiently resilient and strong tread that resists tearing and improves tread stability during the retreading process. Strengthening members also provide an effective skid depth **D₁₆** that is closer to the total tread height **T** than treads provided in the prior art. For example, when employing strengthening members, the undertread thickness **T₁₈** is less than 1.5 mm or less, or 1 mm or less. In such instances, in particular embodiments, strengthening members **24** have a thickness **T₂₄** of 4 mm or less, which is below the groove depth that commonly remains when a tire is removed from service. Width **W₂₄** and frequency must be sufficient to give adequate stiffness to the groove. In addition to strengthening the tread, the strengthening members may also operate as wear bars useful for determining the amount of useful tread remaining. For example, the height of the strengthening members may be preselected to become exposed to the top surface of the tread when an intended thickness of the tread remains in the normal life of the tread. Furthermore, strengthening members may operate as stone ejectors to assist in discharging any unwanted material from the groove, such as stones or other foreign matter, or noise suppressors for reducing the noise generation of the tread during tire operation. When operating as noise suppressors, extend at least halfway through the depth or height of the groove and/or at least halfway across the groove width. In particular embodiments, the strengthening members, when operating as noise suppressors, extend substantially the full depth or height of the groove and/or substantially across the groove width. It is understood, however, that any prior art wear bars, stone ejectors, and noise suppressors are not configured or arranged in sufficient frequency to operate as the strengthening members described herein, and not taught for use in conjunction with thin undertread tire treads to solve the problems described herein that may arise during retreading operations. Accordingly, while the strengthening members may be configured to operate as wear bars, stone ejectors, and/or noise suppressors, strengthening members may or may not operate as such and may be arranged within a groove in addition to other wear bars, stone ejectors, and/or noise suppressors separately provided for their intended purpose.

With specific reference to FIGS. **3-4****,** strengthening members are shown in further detail according to a particular embodiment. In particular, the strengthening members **24** are shown spaced along the groove bottom **17b,** extending across the full width of the groove and from each side **17a.** The strengthening members **24** are shown spaced along the groove bottom **17b** by a spacing **S₂₄,** such that the strengthening members are separated by a distance **Δ₂₄.** The spacing **S₂₄** may comprise any desired spacing sufficient to provide strengthening or stiffening properties as desired for the particular tread design and use. Spacing **S₂₄** is equal to 10 mm or less. It can also be said that the strengthening members are arranged in an array, at least along each tread element. Accordingly, the spacing may be constant along a length of the groove, or may be variable as desired. Nevertheless, the spacing is sufficient to provide a desired stiffness for the undertread thickness reduction. With regard to the distance of separation **Δ₂₄** between adjacent strengthening members **24,** it is understood that such distance may be any distance desired. It is also understood that in certain embodiments, separation distance **Δ₂₄** may be equal to zero.

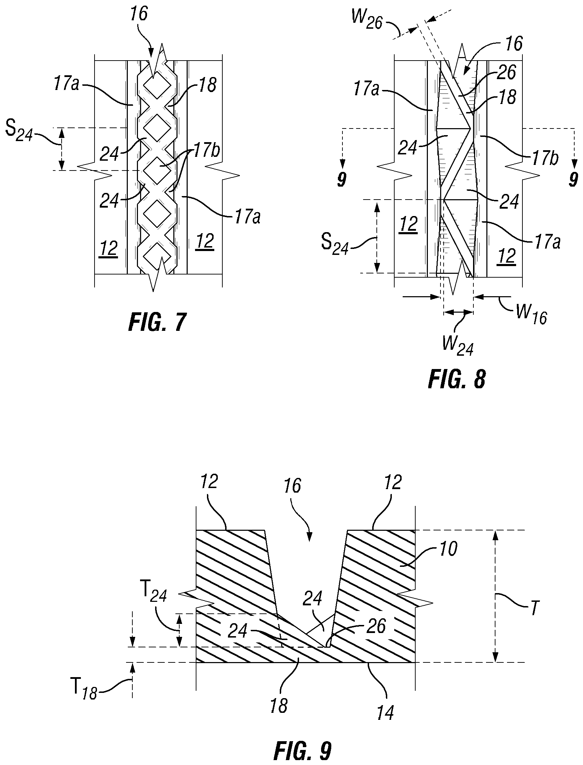

In particular embodiments, the arrangement of strengthening members may be quantified by comparing the void defined by each groove without the presence of any strengthening members with the amount of volume the strengthening members consume within the groove. This comparison of volumes is often referred to as a void volume ratio. For example, in particular embodiments, for a length of the groove, the volume of the groove between the groove bottom and the top of the tallest strengthening member (the height of a strengthening member equals distance **T₂₄,** shown in FIGS. **1** and **9**) is at least 25% filled with strengthening members. In other words, the ratio of strengthening member volume to total groove void as measured below the tallest strengthening member is 1:3. In other embodiments, the volume of the groove between the groove bottom and the top of the tallest strengthening member is at least 20% and at least 40% filled with strengthening members.

With continued reference to FIGS. **3-4****,** strengthening members **24** are shown to comprise rectangular cubes. As such, the sides of each strengthening member **24** generally extend normal to the groove bottom, but may be tapered or inclined such that the sides of the strengthening members intersect the bottom groove at an angle other than 90 degrees. A tapered arrangement may reduce stress concentrations that may form along the sides of the strengthening members at the groove bottom. Furthermore, the strengthening members extend laterally, normal to a longitudinal centerline of the tread. It can also be said that the strengthening members are arranged in an array, at least along each tread element **28** or rib **29.** It is understood, however, that strengthening members may comprise any shape and extend from either or both groove sides **17a,** extend across the groove width fully or partially, and may extend across the groove width **W₁₆** in any direction. In particular exemplary embodiments, a plurality of strengthening members **24** having a width of approximately 8 mm spaced are arranged every 10 mm or less (**S₂₄**) to form an arrangement of strengthening members along a length of a groove.

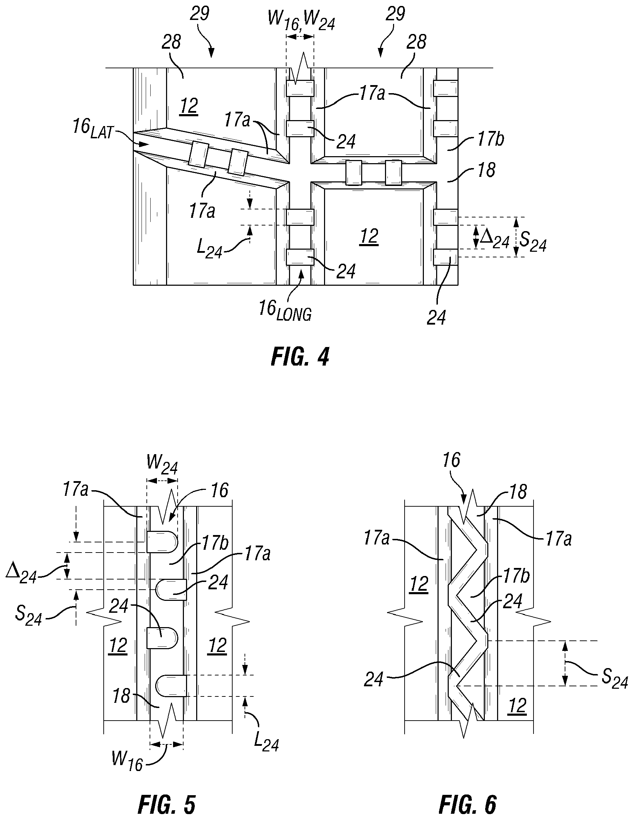

It is understood that strengthening members may form any desired shape and arrangement along a length of a groove. With reference to FIGS. **5-7****,** a variety of groove **16** and strengthening member **24** arrangements are illustrated.

In the embodiment illustrated in FIG. **5****,** strengthening members **24** extend into the groove **16** from opposing sides **17a** in an alternating arrangement along a length of the groove. Each strengthening member **24** has a width **W₂₄** less than the groove width **W₁₆.** In particular embodiments, width **W₂₄** is greater than one-half (1/2), or at least three-quarters (3/4), of the groove width **W₁₆** as measured along the groove bottom (or, in other words, at least ½ or ¾ the width **W₁₆** of the groove bottom) - such as when the groove width varies with the depth of the groove, such as is shown in the FIGURES. In other variations, **W₂₄** extends fully across a width **W₁₆** of the groove, such as is shown in FIGS. **2-4** by example. As can be appreciated from this figure, the strengthening members **24** form rectangular cubes having a rounded terminal end. Further, the length dimension **L₂₄** and spacing **S₂₄** are such that there is space or void arranged between the strengthening members **24.** In particular exemplary embodiments, a plurality of strengthening members **24** having a width of approximately 8 mm spaced are arranged every 5 mm or less (**S₂₄**) to form an arrangement of strengthening members along a length of a groove.

In the embodiment illustrated in FIG. **6****,** strengthening members **24** extend diagonally across the groove width **W₁₆** (that is, in a direction not perpendicular to the length of the groove or biased relative a widthwise direction of the groove) in an alternating arrangement. The strengthening members **24** are also shown connected to form a continuous arrangement of alternating strengthening members extending lengthwise along a length of the groove **16.** In the embodiment shown, the lengthwise extending of the continuous arrangement of strengthening members extends along a zigzag path, although it is understood such path may comprise any non-linear or curvilinear path. In the embodiment shown, strengthening members **24** extend from both opposing sides **17a** diagonally across the groove, although strengthening members may only extend from one of the sides **17a** while still extending lengthwise in a continuous, alternating path. Spacing **S₂₄** represents the length of each strengthening member of the continuous arrangement of strengthening members as the length of each such member extends to and from opposing sides **17a** of a corresponding groove **16.** The continuous arrangement of strengthening members can also be described as a continuous strengthening member having alternating segments extending between opposing sides **17a** of a groove **16.** In other variations, a plurality of strengthening members comprising any shape maybe disconnected (that is, spaced apart) while remaining biased to the groove widthwise direction. In particular exemplary embodiments, a plurality of strengthening members **24** having a width of approximately 8 mm spaced are arranged every 10 mm or less (**S₂₄**) to form an arrangement of strengthening members along a length of a groove.

In a further embodiment illustrated in FIG. **7****,** the strengthening members **24** are arranged to form a continuous arrangement of strengthening members extending lengthwise along a length of the groove **16,** whereby the continuous arrangement forms a network or web of crisscrossing strengthening members. For example, it could be said that the continuous arrangement shown comprises the alternating zigzag arrangement of FIG. **6** overlaid with a second alternating zigzag arrangement shifted lengthwise such that the first and second zigzag arrangements are mirror images of each other as referenced from a longitudinal centerline of the grove. The arrangement of strengthening members **24** shown can also be described as comprising "X" shaped or diamond-shaped strengthening members interconnected to form a continuous arrangement of strengthening members. It is understood that any shaped strengthening members **24** may be used to form a network or web of intersecting or crisscrossing strengthening members. Furthermore, the "X" or diamond-shaped strengthening members **24** may be disconnected, whereby such strengthening members may be separated and spaced apart in lieu of being connected in a continuous arrangement. It is understood that the embodiment of FIG. 7 is a variation of the continuous arrangement of strengthening members shown in FIG. **6****.** In particular exemplary embodiments, a plurality of strengthening members **24** having a width of approximately 8 mm spaced are arranged every 10 mm or less (**S₂₄**) to form an arrangement of strengthening members along a length of a groove.

Yet another embodiment is illustrated in FIGS. **8** and **9****,** whereby strengthening members **24** taper in depth or thickness. Furthermore, strengthening members **24** are spaced apart along a length of the groove and extend alternatively from opposing groove sides **17a** to form an alternating, spaced apart arrangement, and groove bottoms **17b** within the grooves **16** may alternate. In the aspect illustrated in FIGS. **8-9****,** the design is similar to the aspect shown in FIG. **6** with the strengthening members **24** and groove bottoms **17b** being inverted. In this arrangement, the strengthening members **24** form a tetrahedron, or pyramidal in shape, extending from alternating sidewalls **17a.** The strengthening members are arranged such that the arrangement of groove bottom **17b** between the strengthening members **24** forms a reduced groove **26** along the groove bottom zigzagging sideways along a length of the major groove **16.** This reduced groove **26** has a width **W₂₆,** which is shown to be constant but may be variable in other variations. It can be said that the arrangement of strengthening members in FIG. **5** also provide a reduced groove **26.** In the embodiment of FIGS. **8** and **9****,** strengthening member width **W₂₄** is greater than one-half (1/2) of the groove width **W₁₆** and may also be at least equal to three-quarter (3/4) of groove width **W₁₆** or equal to such groove width as measured along the groove bottom. This embodiment is especially advantageous, because it provides the needed rigidity while maintaining a continuous, full depth groove bottom.

Referring specifically to FIG. **9****,** the strengthening member **24** are shown as having a gradually sloped profile between sides **17a** of the groove **16.** According to the aspect illustrated, the strengthening member **24** have the greatest thickness **T₂₄** at the sidewalls **17a** and taper to the groove bottom **17b** as they approach the opposite side. As shown in FIG. **8****,** the strengthening member thickness **T₂₄** may also taper along the length of the strengthening member **L₂₄,** such as from the vertex of the tetrahedron whereby each strengthening member decreases in thickness in each lengthwise direction of the groove.

The arrangement described above provides a tire tread **10** having grooves **16** that define a tread design. The grooves **16** extend from the top side **12** towards the bottom side **14** of the tread **10** and include tapering sides **17a** and a groove bottom **17b** arranged at the full depth of the groove. A series of protrusions **24** extend from the undertread **18** into the grooves **16,** providing a web of connectors, thereby allowing for a thin undertread **18** at other points. In this arrangement, the skid depth **D₁₆** is nearly equal to the tread thickness **T.** The strengthening members **24** arranged along the groove bottom **17b** provide stability, strength, and rigidity to a reduced thickness undertread **18** during the demolding of the precured tread, as the bottom side of the tread is abraded for improved adhesion, and during the handling of the tread during the retreading process, which resists tearing and maintains dimensional stability during the retread process. Furthermore, in any newly formed tire or in any retreaded tire, using the tread designs described herein aid in resisting the formation of cracks within the grooves, and in particular longitudinal grooves, during tire operation. This increases the durability of the tire and the tread.

The performance of the strengthening members has been evaluated according to certain tests to confirm the benefits of the strengthening members. In particular, the performance of the tread generally represented by FIGS. **8** and **9** was evaluated, treads having a reduced thickness with strengthening members generally described in FIGS. **8** and **9** were evaluated against treads having prior art undertread thicknesses without strengthening members. (For the test, the continuous arrangement of strengthening members formed an alternating arrangement comprising a winding, curvilinear arrangement as opposed to the linear-segmented, zig-zag arrangement shown in the FIG **8**.) Specifically, reduced undertread-thickness treads were characterized as having an overall thickness **T** of 11 mm and an undertread thickness **T₁₈** of 1.0 to 1.4 mm, with the height of the strengthening members **24** being spaced a spacing **S₂₄** of 10 mm. The prior art tread (with reference to FIG. **1**) had an overall thickness **T'** of 13 mm and an undertread thickness **T'₁₈** of 3.5 mm. Testing included verifying the durability of the reduced undertread-thickness treads as they were processed and used to form a retreaded tire. Furthermore, the retreaded tires were inspected to ascertain whether any peaking of bonding layer material (*e.g.*, see element **22** in FIG. **1**) occurred, where peaking would cause excessive bonding layer material to accumulate beneath the undertread (*e.g.*, see element **18** in FIG. **1**) and therefore push the undertread upwards and further into the groove to reduce the overall depth of the groove. Finally, the retreaded tires were run under common conditions to ascertain the performance of the reduced-thickness undertread tires with regard to crack initiation and propagation along the groove bottom and with regard to tread operating temperature and tire rolling resistance. In conclusion, while maintaining the same groove depth between the different tire treads while also removing 21% weight in the reduced undertread-thickness tread by reducing the thickness of the undertread, no noticeable bonding layer peaking was observed in the reduced undertread-thickness tires, which would have been expected to peak without use of the strengthening members. Furthermore, no noticeable cracking was observed along the groove bottoms for those reduced undertread-thickness treads employing the strengthening members. Finally, the operating temperature of the reduced-thickness undertread tires ran approximately 12% cooler across the tread (from shoulder to center), and exhibited a 4.5% reduction in rolling resistance. Therefore, by reducing the undertread thickness to reduce the weight of the tread without reducing the depth of any groove, the reduced undertread-thickness tread was able to avoid issues normally arising when reducing the thickness of the undertread - such as peaking and cracking.

The tire treads described above may be formed as a precured tread and attached to a tire carcass in a retreading operation or may be formed with a new tire according to any new tire forming operation, which may occur in a tire molding operation. Accordingly, a tire may comprise a tire carcass and a tire tread bonded to the tire carcass, the tire tread including: a tread thickness bounded by a top side and a bottom side and opposing lateral sides; a groove extending into the tread thickness from the tread top side and terminating within a thickness of the tread at a groove bottom, the groove having a width defined by a pair of opposing sides and the groove bottom being spaced from the bottom side of the tread by an undertread thickness; and, a plurality of strengthening members forming protrusions extending into the groove from the groove bottom and from at least one side of the pair of opposing groove sides, the plurality of strengthening members being arranged along a length of the groove. In such embodiments, the tire tread may comprise a precured tread formed prior to application to the tire carcass or a new tread molded with (that is, while arranged along) the tire carcass. When the tread is a precured tread, a bonding material may be arranged between the tread and the tire carcass.

The present invention may be utilized in association with retreaded heavy duty truck or trailer tires. Heavy duty truck tires include steer and drive tires and trailer tires. Nevertheless, the present invention may be utilized in association with any type of tire to form any new or retreaded tire and as such, any type of tire may employ the present invention. Exemplary tire types for use with the subject invention further include light truck tires, off the road tires, bus tires, aircraft tires, bicycle tires, motorcycle tires, and passenger vehicle tires.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i.e.,* not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated.

## Claims

1. A tire tread (10) comprising:
a tread thickness (T) bounded by a top side (12) and a bottom side (14) and opposing lateral sides (19), the tire tread bottom side (14) configured to be attached to an annular tire carcass (20);
a groove (16) extending into the tread thickness (T) from the tread top side (12) and terminating within a thickness (T) of the tread (10) at a groove bottom (17b), the groove (16) having a width defined by a pair of opposing sides (17a) and the groove bottom (17b) being spaced from the bottom side (14) of the tread by an undertread thickness; where the undertread thickness is equal to 1.5 mm or less,
a plurality of strengthening members (24) forming protrusions extending into the groove (16) from the groove bottom (17b) and from at least one side of the pair of opposing groove sides (17a),
**characterized by** the plurality of strengthening members (24) being arranged every 10 mm or less along a length of the groove (16).

2. The tire tread (10) of claim 1, where the plurality of strengthening members (24) are spaced apart along the length of the groove (16).

3. The tire tread (10) of claim 2, where the plurality of strengthening members (24) are arranged to extend from opposing sides (17a) of the pair of sides in an alternating arrangement.

4. The tire tread (10) of claim 3, where a thickness of each of the plurality of strengthening members (24) tapers as each of the strengthening members (24) extend from one side of the pair of opposing groove sides (17a).

5. The tread (10) of claim 1, wherein the plurality of strengthening members (24) extends across a width of the groove (16) and from each of the pair of groove sides (17a).

6. The tire tread (10) of claim 1, where the plurality of strengthening members (24) are connected to form a continuous arrangement of strengthening members (24).

7. The tire tread (10) of claim 6, where the plurality of strengthening members (24) crisscross or zigzag from sideways along a length of the groove (16).

8. The tire tread (10) of claim 1, where each of the plurality of strengthening members (24) extends more than halfway across the width of the groove bottom (16).

9. The tire tread (10) of claim 8, wherein each of the plurality of strengthening members (24) extends fully across the groove bottom width and from each of the pair of groove sides (17a).

10. The tire tread (10) of claim 9, wherein the plurality of strengthening members (24) extend diagonally across the groove width (W16).

11. The tire tread (10) of claim 1, wherein one of the plurality of strengthening members (24) intersects another one of the plurality of strengthening members (24) within the groove width (W16) between the pair of sides.

12. The tire tread (10) of claim 1, where the undertread thickness is less than 8% of the tread thickness (T).

13. The tire tread (10) of claim 4, where the thickness of each of the plurality of strengthening members (24) forms a vertex of a tetrahedron, wherein each of the plurality of strengthening members (24) decreases in thickness along each direction of the length of the groove (16).

14. The tire tread (10) of claim 1, where each of the plurality of strengthening members (24) has a thickness of 4 mm or less.

15. The tire tread of claim 1, where the plurality of strengthening members are arranged every 5 mm or less along the length of the groove (16).

16. The tire tread of claim 1, further comprising a lateral groove extending into a thickness from the tread top side and terminating within a thickness of the tread at a groove bottom, where a plurality of strengthening members form protrusions extending into the lateral groove from the groove bottom and from at least one side of a pair of opposing groove sides.

## Patentansprüche

1. Reifenlauffläche (10), umfassend:
eine Laufflächendicke (T), die durch eine Oberseite (12) und eine Unterseite (14) und gegenüberliegende Seitenflächen (19) begrenzt wird, wobei die Laufflächen-Unterseite (14) dafür ausgelegt ist, an einer ringförmigen Reifenkarkasse (20) befestigt zu werden;
eine Nut (16), die sich in die Laufflächendicke (T) von der Oberseite (12) der Lauffläche aus erstreckt und innerhalb einer Dicke (T) der Lauffläche (10) an einem Nutboden (17b) endet, wobei die Nut (16) eine Breite hat, die durch ein Paar von gegenüberliegenden Seiten (17a) festgelegt wird, und wobei der Nutboden (17b) einen Abstand von der Bodenseite (14) der Lauffläche durch eine Unterlaufflächendicke hat, wobei die Unterlaufflächendicke kleiner oder gleich 1,5 mm ist,
eine Vielzahl von Verstärkungselementen (24), die Vorsprünge bilden, welche sich in die Nut (16) vom Nutboden (17b) und von mindestens einer Seite des Paares von gegenüberliegenden Nutseiten (17a) aus erstrecken,
**dadurch gekennzeichnet, dass** die Vielzahl von Verstärkungselementen (24) aller 10 mm oder weniger entlang einer Länge der Nut (16) angeordnet ist.

2. Reifenlauffläche (10) nach Anspruch 1, wobei die Vielzahl von Verstärkungselementen (24) entlang der Länge der Nut (16) mit Abstand angeordnet ist.

3. Reifenlauffläche (10) nach Anspruch 2, wobei die Vielzahl von Verstärkungselementen (24) dafür ausgelegt ist, sich von gegenüberliegenden Seiten (17a) der Seitenpaare in einer abwechselnden Anordnung zu erstrecken.

4. Reifenlauffläche (10) nach Anspruch 3, wobei eine Dicke von jedem der Vielzahl von Verstärkungselementen (24) sich verjüngt, wenn jedes der Verstärkungselemente (24) sich von einer Seite des Paares von gegenüberliegenden Nutseiten (17a) aus erstreckt.

5. Lauffläche (10) nach Anspruch 1, wobei die Vielzahl von Verstärkungselementen (24) sich über eine Breite der Nut (16) und von jeder Seite des Paares von Nutseiten (17a) aus erstreckt.

6. Reifenlauffläche (10) nach Anspruch 1, wobei die Vielzahl von Verstärkungselementen (24) verbunden sind, um eine durchgehende Anordnung von Verstärkungselementen (24) zu bilden.

7. Reifenlauffläche (10) nach Anspruch 6, wobei die Vielzahl von Verstärkungselementen (24) von der Seite entlang einer Länge der Nut (16) kreuz und quer verläuft.

8. Reifenlauffläche (10) nach Anspruch 1, wobei jedes der Vielzahl von Verstärkungselementen (24) sich mehr als halbwegs über die Breite des Nutbodens (16) erstreckt.

9. Reifenlauffläche (10) nach Anspruch 8, wobei jedes der Vielzahl von Verstärkungselementen (24) sich vollständig über die Breite des Nutbodens und von jeder Seite des Paares von Nutseiten (17a) erstreckt.

10. Reifenlauffläche (10) nach Anspruch 9, wobei die Vielzahl von Verstärkungselementen (24) sich diagonal über die Nutbreite (W16) erstreckt.

11. Reifenlauffläche (10) nach Anspruch 1, wobei eines der Vielzahl von Verstärkungselementen (24) ein anderes aus der Vielzahl von Verstärkungselementen (24) innerhalb der Nutbreite (W16) zwischen den Seitenpaaren kreuzt.

12. Reifenlauffläche (10) nach Anspruch 1, wobei die Unterlaufflächendicke kleiner als 8 % der Laufflächendicke (T) ist.

13. Reifenlauffläche (10) nach Anspruch 4, wobei die Dicke von jedem der Vielzahl von Verstärkungselementen (24) einen Scheitelpunkt eines Tetraeders bildet, wobei jedes der Vielzahl von Verstärkungselementen (24) sich in der Dicke entlang jeder Richtung der Länge der Nut (16) verringert.

14. Reifenlauffläche (10) nach Anspruch 1, wobei jedes der Vielzahl von Verstärkungselementen (24) eine Dicke von 4 mm oder weniger hat.

15. Reifenlauffläche nach Anspruch 1, wobei die Vielzahl von Verstärkungselementen aller 5 mm oder weniger entlang der Länge der Nut (16) angeordnet ist.

16. Reifenlauffläche nach Anspruch 1, die ferner eine seitliche Nut umfasst, welche sich in eine Dicke von der Laufflächen-Oberseite aus erstreckt und innerhalb einer Dicke der Lauffläche an einem Nutboden endet, wobei eine Vielzahl von Verstärkungselementen Vorsprünge bildet, die sich in die seitlichen Nut vom Nutboden und von mindestens einer Seite eines Paares von gegenüberliegenden Nutseiten aus erstreckt.

## Revendications

1. Bande de roulement (10) de pneu, comprenant :
une épaisseur (T) de bande de roulement, délimitée par un côté supérieur (12) et un côté inférieur (14) et des côté latéraux opposés (19), le côté inférieur (14) de la bande de roulement du pneu étant configuré pour être fixé à une carcasse annulaire (20) de pneu ;
une rainure (16), s'étendant dans l'épaisseur (T) de bande de roulement à partir du côté supérieur (12) de la bande de roulement et se terminant dans une épaisseur (T) de la bande de roulement (10) au fond (17b) de la rainure, la rainure (16) ayant une largeur définie par une paire de côtés opposés (17a) et le fond (17b) de la rainure étant espacé du côté inférieur (14) de la bande de roulement par une épaisseur de sous-chape, où l'épaisseur de sous-chape est inférieure ou égale à 1,5 mm,
une pluralité d'éléments de renforcement (24), formant des protubérances qui s'étendant dans la rainure (16) depuis le fond (17b) de la rainure et depuis au moins un côté de la paire de côtés opposés (17a) de la rainure,
**caractérisée en ce que**
la pluralité d'éléments de renforcement (24) est agencée tous les 10 mm ou moins le long d'une longueur de la rainure (16).

2. Bande de roulement (10) de pneu selon la revendication 1, où la pluralité d'éléments de renforcement (24) est espacée le long de la longueur de la rainure (16).

3. Bande de roulement (10) de pneu selon la revendication 2, où la pluralité d'éléments de renforcement (24) est agencée pour s'étendre à partir de côtés opposés (17a) de la paire de côtés dans un agencement alternatif.

4. Bande de roulement (10) de pneu selon la revendication 3, où une épaisseur de chaque élément de la pluralité d'éléments de renforcement (24) s'effile au fur et à mesure que chacun des éléments de renforcement (24) s'étend depuis un côté de la paire de côtés opposés (17a) de la rainure.

5. Bande de roulement (10) selon la revendication 1, dans laquelle la pluralité d'éléments de renforcement (24) s'étend sur une largeur de la rainure (16) et à partir de chacun des côtés de la paire de côtés (17a) de la rainure.

6. Bande de roulement (10) de pneu selon la revendication 1, où la pluralité d'éléments de renforcement (24) est reliée, pour former un agencement continu d'éléments de renforcement (24).

7. Bande de roulement (10) de pneu selon la revendication 6, où la pluralité d'éléments de renforcement (24) s'entrecroise ou zigzague de côté, le long d'une longueur de la rainure (16).

8. Bande de roulement (10) de pneu selon la revendication 1, où chaque élément de la pluralité d'éléments de renforcement (24) s'étend sur plus de la moitié sur la largeur du fond de la rainure (16).

9. Bande de roulement (10) de pneu selon la revendication 8, dans laquelle chaque élément de la pluralité d'éléments de renforcement (24) s'étend intégralement sur la largeur du fond de la rainure et depuis chacun des côtés (17a) de la paire de côtés de la rainure.

10. Bande de roulement (10) de pneu selon la revendication 9, dans laquelle la pluralité d'éléments de renforcement (24) s'étend en diagonale sur la largeur (W16) de la rainure.

11. Bande de roulement (10) de pneu selon la revendication 1, dans laquelle un élément parmi la pluralité d'éléments de renforcement (24) croise un autre élément de la pluralité d'éléments de renforcement (24) dans la largeur (W16) de la rainure, entre la paire de côtés.

12. Bande de roulement (10) de pneu selon la revendication 1, où l'épaisseur de sous-chape fait moins de 8 % de l'épaisseur (T) de la bande de roulement.

13. Bande de roulement (10) de pneu selon la revendication 4, où l'épaisseur de chaque élément de la pluralité d'éléments de renforcement (24) forme un sommet d'un tétraèdre, dans laquelle chaque élément de la pluralité d'éléments de renforcement (24) diminue en épaisseur le long de chaque direction de la longueur de la rainure (16).

14. Bande de roulement (10) de pneu selon la revendication 1, où chaque élément de la pluralité d'éléments de renforcement (24) a une épaisseur de 4 mm ou moins.

15. Bande de roulement de pneu selon la revendication 1, où la pluralité d'éléments de renforcement est agencée tous les 5 mm ou moins le long de la longueur de la rainure (16).

16. Bande de roulement de pneu selon la revendication 1, comprenant en outre une rainure latérale, s'étendant dans une épaisseur depuis le côté supérieur de la bande de roulement et se terminant dans une épaisseur de la bande de roulement au fond d'une rainure, où une pluralité d'éléments de renforcement forme des protubérances qui s'étendent dans la rainure latérale à partir du fond de la rainure et depuis au moins un côté d'une paire de côtés opposés de la rainure.
